# EUROPEAN PATENT APPLICATION

(11) **EP 3 578 954 A1**
(43) Date of publication of application: **11.12.2019**
(21) Application number: 17895284.2
(22) Date of filing: 01.02.2017
(51) Int. Cl.: G01N 17/02, G01N 27/26

(54) **SENSOR HOLDING DEVICE AND SENSOR HOLDING SYSTEM**

(71) Applicant: Tokyo Electric Power Company Holdings, Incorporated, Tokyo 100-8560 (JP); Syrinx Co., Ltd., Tokyo 104-0061 (JP)
(72) Inventor: OSADA Masanori, Tokyo 100-8560 (JP); TATSUOKA Teruhisa, Tokyo 100-8560 (JP); MIYAJIMA Takuro, Tokyo 100-8560 (JP); OHTA Hiroshi, Tokyo 100-8560 (JP); HIDA Tomohito, Tokyo 100-8560 (JP); SUZUKI Tomoyasu, Tokyo 104-0061 (JP)
(74) Representative: EP&C
(86) International application number: PCT/JP2017/003594
(87) International publication number: WO 2018/142502

(57) **Abstract**

This sensor holding device is provided with a sensor holding part that is provided with a plurality of holding positions for holding a detection part which is configured to detect the degree of corrosion, a lid through which a portion of the sensor holding part in exposed but the other portion is not exposed, and a control unit that is configured to change an exposure position on the sensor holding part where the sensor holding part is exposed, by controlling the relative position between the sensor holding part and the lid.

## Description

### [Technical Field]

The present invention relates to a sensor holding device and a sensor holding system.

### [Background Art]

In recent years, technology related to SHM (Structure Health Monitoring) is known. The SHM is the technology that observes distortion, vibration, corrosion, etc. by sensors mounted to a structure, analyzes the sensing data, and performs degradation diagnosis and abnormality detection etc. of the structure. In the related art, technology that mounts corrosion sensors on the steel material that forms the structure, and detects the extent of corrosion of the structures is known (for example, Patent Document 1).

### [Citation List]

### [Patent Literature]

[Patent Document 1]
Japanese Unexamined Patent Publication No. 2012-145330

### [Summary of Invention]

### [Technical Problem]

When the structure is a steel tower, workers who mount sensors detecting the state of the structure are required to work at heights. In this case, the workers have difficulty mounting or replacing the sensors easily. Namely, there is a case in which it is difficult to reduce labor of mounting the sensors depending on the location of the sensors.

The present invention is devised to solve the foregoing problems and an object of the present invention is to provide a mechanism to reduce labor of mounting corrosion sensors on a structure.

### [Solution to Problem]

According to an embodiment of the present invention, there is provided a sensor holding device including: a sensor holding unit configured to include a plurality of holding areas holding detection units that are configured to detect the extent of corrosion; and a state switching unit configured to be able to put sensor surfaces in an exposed state when the detection units are held in a part of the holding areas among the holding areas included in the sensor holding unit, and to put the sensor surfaces in an unexposed state when the detection units are held in the other part of the holding areas.

In the sensor holding device according to the embodiment of the present invention, the state switching unit may include a plurality of lid units respectively corresponding to the holding areas included in the sensor holding unit, the lid units of the holding areas that are made in the exposed state may be in an open state, the lid units of the holding areas that are made in the unexposed state may be in a closed state.

In the sensor holding device according to the embodiment of the present invention, the state switching unit may include a cover unit with a shape that can cover a part of the holding areas among the holding areas included in the sensor holding unit without covering the other part of the holding areas, the holding areas that are not covered by the cover unit may be made in the exposed state in accordance with the relative position of the cover unit and the sensor holding unit, the holding areas that are covered by the cover unit may be made in the unexposed state in accordance with the relative position of the cover unit and the sensor holding unit.

In the sensor holding device according to the embodiment of the present invention, the relative position of the sensor holding unit and the cover unit may be changed in the rotation direction around a predetermined rotation center, the sensor holding unit may include the holding areas along the circumference of the rotation center.

In the sensor holding device according to the embodiment of the present invention, the state switching unit may be able to put the sensor surfaces in the unexposed state when the detection units are held in all of the holding areas included in the sensor holding unit.

The sensor holding device according to the embodiment of the present invention may include a mounting unit configured to mount the sensor holding device itself to an object, wherein when the sensor holding device itself is mounted to the object, the state switching unit can put the sensor surfaces in a vertically upward exposed state as the exposed state.

According to an embodiment of the present invention, there is provided a sensor holding system including a plurality of sensor holding devices mentioned above, wherein the sensor holding system changes the exposed state of the sensor holding devices.

### [Advantageous Effects of Invention]

According to the present invention, it is possible to provide a mechanism to reduce labor of mounting corrosion sensors on a structure.

### [Brief Description of Drawings]

Fig. 1 is a diagram showing an example of an outline of a sensor holding device according to a first embodiment.
Fig. 2 is a first diagram showing an example of a configuration of the sensor holding device according to the first embodiment.
Fig. 3 is a diagram showing an example of a configuration of the sensor holding device 1 according to a modification 1.
Fig. 4 is a diagram showing an example of a configuration of the sensor holding device 1 according to a modification 2.
Fig. 5 is a diagram showing an example of a configuration of the sensor holding device 1 according to a modification 3.
Fig. 6 is a second diagram showing an example of a configuration of the sensor holding device according to a second embodiment.
Fig. 7 is a diagram showing an example of a cover unit according to the second embodiment.
Fig. 8 is a diagram showing an example of a sensor holding unit according to the second embodiment.
Fig. 9 is a diagram showing an example of a relative position of the sensor holding unit, gaskets and the cover unit according to the second embodiment.
Fig. 10 is a diagram showing an example of a control unit according to the second embodiment.
Fig. 11 is a diagram showing an example of a mounting direction of the sensor holding device 2 according to the second embodiment.
Fig. 12 is a diagram showing an example of a configuration of the sensor holding device 2 according to a modification 4.
Fig. 13 is a diagram showing an example of a configuration of the sensor holding device 2 according to a modification 5.

### [Description of Embodiments]

### [First embodiment]

### <Outline of sensor holding device>

Hereinafter, embodiments of the present invention will be described with reference to the drawings.

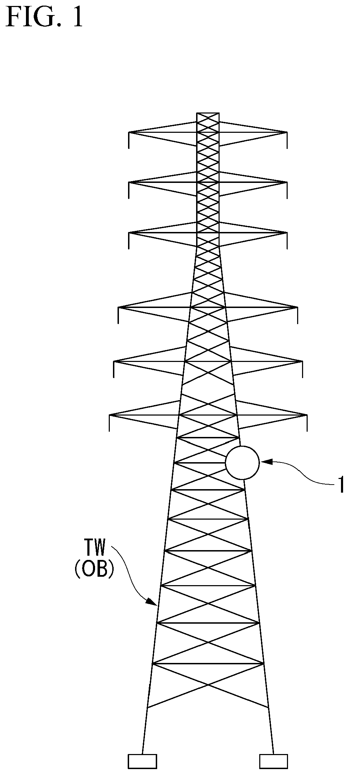

Fig. 1 is a diagram showing an example of an outline of a sensor holding device 1 according to a first embodiment.

The sensor holding device 1 is a device which is mounted to an object OB, and detects state of the object OB. As shown in Fig. 1, in this example, the object OB is a steel tower TW. The sensor holding device 1 has a plurality of detection units (not shown). The detection units are corrosion sensor, sea salt adhesion sensor, degradation prediction sensor, wetness sensor, dry gauze, zinc dioxide (hereinafter PbO2) plate, humidity sensor, rainfall sensor etc. The corrosion sensor, the sea salt adhesion sensor, the degradation prediction sensor, and the wetness sensor are sensors that detect extent of corrosion in the air environment in the mounting position. The corrosion sensor, the sea salt adhesion sensor, the degradation prediction sensor, and the wetness sensor are, for example, ACM (Atmospheric Corrosion Monitor) sensors. The corrosion sensor, the sea salt adhesion sensor, the degradation prediction sensor, and the wetness sensor are sensors that corrode in the air environment in the mounting position and detect the extent of corrosion.

The dry gauze is gauze which is used for measurement of chloride by dry gauze method. The dry gauze adheres chloride to the surface. Analysts of the air environment can analyze the degree of chloride existing in the air environment in the mounting position of the dry gauze by using the dry gauze. The PbO2 plate captures sulfur dioxide, by reacting with sulfur dioxide existing in the air environment in the mounting position of the PbO2 plate, and by forming sulfates. Analysts of the air environment can analyze the degree of sulfur dioxide existing in the air environment in the mounting position of the PbO2 plate by using the PbO2 plate.

The humidity sensor is a sensor that detect humidity in the air environment in the mounting position. The rainfall sensor is a sensor that detects rainfall in the mounting position.

In the following explanation, a case in which the sensor holding device 1 has a plurality of corrosion sensors (hereinafter described as corrosion sensors C) will be described. The corrosion sensors C detect the extent of corrosion in the mounting position of the sensor holding device 1 on the steel tower TW, and record information (hereinafter detection information) indicating the extent of corrosion. An administrator who manages the steel tower TW estimates the extent of corrosion of the steel tower TW by referring to the detection information recorded by the sensor holding device 1 in the mounting position of the sensor holding device 1.

As explained above, a configuration in which the sensor holding device 1 records the detection information is described, but it is not limited to this. The sensor holding device 1 may be connected to an aggregation device which aggregates the detection information, so that the sensor holding device 1 can send and receive information, and may send the detection information to the aggregation device.

### <Configuration of sensor holding device: case of box type>

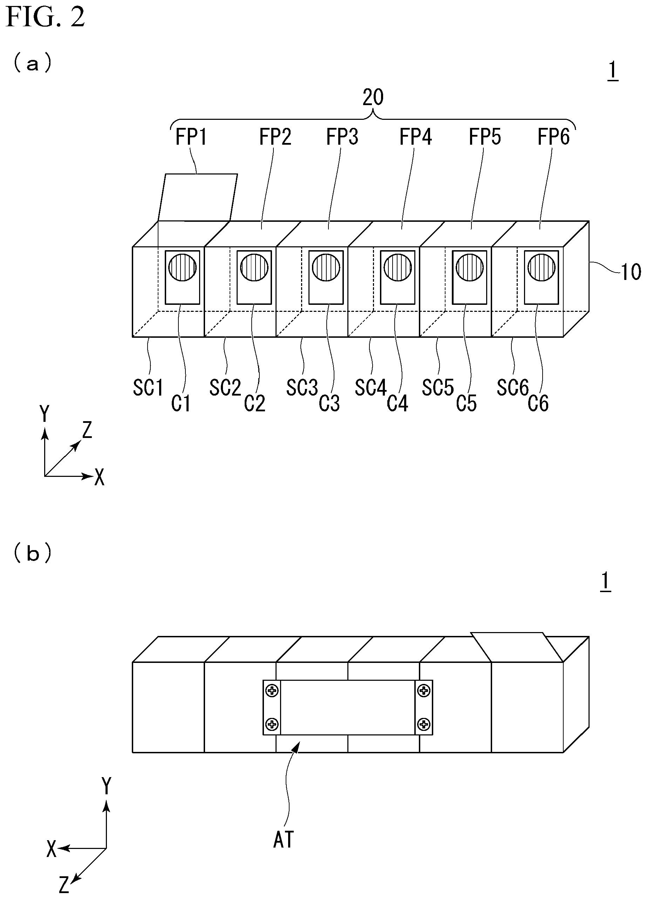

Hereinafter, with reference to Fig. 2, the configuration of the sensor holding device 1 will be described. Fig. 2 is a first diagram showing an example of the configuration of the sensor holding device 1 according to the first embodiment. Concretely, (a) in Fig. 2 shows an example of front of the sensor holding device 1, and (b) in Fig. 2 shows an example of back of the sensor holding device 1.

In the following explanation, as shown in Fig. 2 etc., by setting the XYZ Cartesian coordinate system, positional relationship of each part may be described. In the XYZ Cartesian coordinate system, Y axis direction is longitudinal direction of the sensor holding device 1, X axis direction is lateral direction of the sensor holding device 1, and Z axis direction is depth direction of the sensor holding device 1. Also, in the following explanation, Y axis positive direction is described as upper, and Y axis negative direction is described as is described as lower. X axis positive direction is described as right, and X axis negative direction is described as left. Z axis positive direction is described as backward, and Z axis negative direction is described as forward. Among the surfaces of the sensor holding device 1, a surface in Z axis positive direction is described as a back surface, and a surface in Z axis negative direction is described as a front surface, the back surface and the front surface are parallel to XY plane.

### <Sensor holding unit>

The sensor holding device 1 include a sensor holding unit 10 and a state switching unit 20. The sensor holding unit 10 is a mechanism to hold the corrosion sensors C. In this embodiment, the sensor holding device 1 is box type. Concretely, the sensor holding device 1 includes the sensor holding unit 10 which is box type. The sensor holding unit 10 is separated into a plurality of spaces SC by partitions. The sensor holding unit 10 is separated into the plurality of spaces SC corresponding to the number of the corrosion sensors C included in the sensor holding device 1. As shown by (a) in Fig. 2, the sensor holding unit 10 includes six spaces SC which are spaces SC1 to SC6, in the sensor holding unit 10. Each of the spaces SC has an opening and has a box type shape. The spaces SC1 to SC6 have holding areas HA (not shown) respectively. The holding areas HA are areas which exist on surfaces (hereinafter sensor surfaces) where the corrosion sensors C are held, among surfaces included in the sensor holding unit 10. One of the corrosion sensors C is held in one of the holding areas HA. In this example, the space SC1 has a holding area HA1, and a corrosion sensor C1 is held in the holding area HA1. The space SC2 has a holding area HA2, and a corrosion sensor C2 is held in the holding area HA2. The space SC3 has a holding area HA3, and a corrosion sensor C3 is held in the holding area HA3. The space SC4 has a holding area HA4, and a corrosion sensor C4 is held in the holding area HA4. The space SC5 has a holding area HA5, and a corrosion sensor C5 is held in the holding area HA5. The space SC6 has a holding area HA6, and a corrosion sensor C6 is held in the holding area HA6.

Also, the holding areas HA are areas on the sensor holding unit 10, and are areas which exist on a side that is placed behind the spaces SC.

As explained above, a case in which the holding areas HA are the areas on the sensor holding unit 10, and are the areas which exist on the side that is placed behind the spaces SC is described, but it is not limited to this. The holding areas HA may be areas which exist on at least one side that is placed behind the spaces SC, is placed in front of the spaces SC, is placed on the left of the spaces SC, or is placed on the right of the spaces SC.

### <State switching unit (lid units)>

Also, as shown by (a) in Fig. 2, the sensor holding device 1 has a plurality of lid units FP, each of which corresponds to each of the holding areas HA included in the sensor holding unit 10. Concretely, the space SC1 (the holding area HA1) has a lid unit FP1, the space SC2 (the holding area HA2) has a lid unit FP2, the space SC3 (the holding area HA3) has a lid unit FP3, the space SC4 (the holding area HA4) has a lid unit FP4, the space SC5 (the holding area HA5) has a lid unit FP5, and the space SC6 (the holding area HA6) has a lid unit FP6.

The shape of the lid units FP correspond to or approximately correspond to the shape of openings of the spaces SC. When the lid units FP are in a closed state, the openings of the spaces SC are covered by the lid units FP. When the lid units FP are in the closed state, spaces EP defined by the spaces SC and the lid units FP are sealed or approximately sealed. In other words, when the lid units FP are in the closed state, the holding areas HA (the corrosion sensors C) are in a state unexposed to the atmospheric environment (hereinafter unexposed state). When the lid units FP are in an open state, at least a part of the openings of the spaces SC are not covered by the lid units FP. When the lid units FP are in the open state, the spaces EP defined by the spaces SC and the lid units FP are not sealed. In other words, when the lid units FP are in the open state, the holding areas HA (the corrosion sensors C) are in a state exposed to the atmospheric environment (hereinafter exposed state). The corrosion sensors C in the exposed state detect the extent of corrosion in the air environment in the mounting position of the sensor holding device 1. The corrosion sensors C in the unexposed state do not detect the extent of corrosion in the air environment in the mounting position of the sensor holding device 1.

The lid units FP are collectively described as the state switching unit 20. In other words, the state switching unit 20 includes the lid units FP.

Also, in this example, the sensor holding unit 10 includes desiccants dt (not shown) in the spaces SC, respectively. The desiccants dt which are placed in the spaces EP dry the air in the spaces EP defined by the spaces SC and the lid units FP.

The sensor holding unit 10 may include dehumidifying agents, instead of the desiccants dt. In this case, the dehumidifying agents remove the humidity of the spaces EP in which the dehumidifying agents are placed. The sensor holding unit 10 may include heaters instead of the desiccants dt. In this case, the heaters raise the temperature in the spaces EP in which the heaters are placed, and remove the humidity.

### <Control for opening or closing of lid units>

Each of the lid units FP are controlled to open or close. For example, the sensor holding device 1 includes a control unit 30 (not shown), the control unit 30 controls each of the lid units FP to open or close.

For example, the control unit 30 controls at least a part of the lid units FP in the open state, and the other part of the lid units FP in the closed state. Also, after the corrosion sensors C held in the holding areas HA in the exposed state detect the extent of corrosion, the control unit 30 controls the lid units FP included in the spaces SC which have the holding areas HA, in the closed state.

Concretely, when the control unit 30 controls the lid unit FP1 in the open state, the control unit 30 controls the lid units FP2 to FP6 in the closed state. Also, after the corrosion sensor C1 held in the holding area HA1 included in the space SC1 which has the lid unit FP1 detects the extent of corrosion, the control unit 30 controls the lid unit FP1 in the closed state.

Preferably, the control unit 30 controls the lid units FP of the spaces SC including the holding areas HA holding the corrosion sensors C which have not detected the extent of corrosion, in the open state. Preferably, the control unit 30 controls all of the lid units FP in the closed state, before all of the corrosion sensors C detect the extent of corrosion (hereinafter start state) or after at least a part of the corrosion sensors C detect the extent of corrosion (hereinafter end state). For example, the start state is a state at the time of factory shipment of the sensor holding device 1, or a state before the sensor holding device 1 starts recording the extent of corrosion detected by the corrosion sensors C included in the sensor holding device 1.

### <Mounting unit>

Also, as shown by (b) in Fig. 2, the sensor holding device 1 includes a mounting unit AT. The mounting unit AT is a mechanism which mounts the sensor holding device 1 to the object OB (in this example, the steel tower TW) which the sensor holding device 1 is mounted to. In this example, the sensor holding device 1 includes the mounting unit AT placed on the back of the sensor holding device 1. The mounting unit AT is, for example, a stainless steel band, a mounting bracket, an adhesive seal, an adhesive sticker, etc. In this example, a case in which the mounting unit AT is the mounting bracket will be described.

As shown by (a) in Fig. 2, the openings of the spaces SC included in the sensor holding unit 10 are placed vertically upward in a mounting state in which the sensor holding device 1 is mounted to the object OB by the mounting unit AT. Therefore, when the sensor holding device 1 is mounted to the object OB by the mounting unit AT, and when the lid units FP are controlled in the open state, the sensor holding unit 10 can put the holding areas HA (corrosion sensors C) of the spaces SC including the lid units FP, in the exposed state.

The openings of the spaces SC included in the sensor holding unit 10 may be placed vertically below the sensor holding unit 10 in the mounting state, or may be placed in front of the spaces SC.

### <Summary of first embodiment>

As explained above, the sensor holding device 1 according to the present embodiment includes the sensor holding unit 10 and the state switching unit 20. The sensor holding unit 10 includes the holding areas HA which hold the detection units (in this example, the corrosion sensors C) which detect the extent of corrosion. The state switching unit 20 can put the sensor surfaces in the exposed state when the corrosion sensors C are held in a part of the holding areas HA included in the sensor holding unit 10, and can put the sensor surfaces in the unexposed state when the corrosion sensors C are held in the other part of the holding areas HA included in the sensor holding unit 10. Concretely, the state switching unit 20 included in the sensor holding device 1 according to the present embodiment includes the lid units FP respectively corresponding to the holding areas HA included in the sensor holding unit 10. The lid units FP in the open state put the holding areas HA in the exposed state. The lid units FP in the closed state put the holding areas HA in the unexposed state.

Conventionally, when the object is the steel tower and when it is required to detect the extent of corrosion of the object, workers who mount sensors such as the corrosion sensors must work at heights, it is difficult to easily mount or replace the sensors.

The sensor holding device 1 according to the present embodiment includes the corrosion sensors C and can change the exposed state and the unexposed state of the corrosion sensors C. Accordingly, the sensor holding device 1 according to the present embodiment can reduce labor for mounting the corrosion sensors C.

The sensor holding device 1 according to the present embodiment include the corrosion sensors C so that the sensor holding device 1 can make the corrosion sensors C replacement interval longer than a case in which one corrosion sensor C is included. In other words, the sensor holding device 1 according to the present embodiment can make the corrosion sensors C maintenance interval longer.

The state switching unit 20 (in this example, the lid units FP) included in the sensor holding device 1 according to the present embodiment can put the sensor surfaces in the unexposed state when the corrosion sensors C are held in all of the holding areas HA included in the sensor holding unit 10.

When the corrosion sensors C in the start state are in the exposed state, corrosion of the corrosion sensors C advances before the sensor holding device 1 is mounted to the object OB, therefore accurately detecting the extent of corrosion in the mounting position may be difficult. When it is difficult for an installer of the sensor holding device 1to immediately recover the sensor holding device 1 in the end state, corrosion of the corrosion sensors C advances before the sensor holding device 1 is recovered, therefore accurately detecting the extent of corrosion during the desired period may be difficult.

In accordance with the sensor holding device 1 according to the present embodiment, by making the corrosion sensors C in the unexposed state when the corrosion sensors C is in the start state and the end state, it can be suppressed that the corrosion sensors C are made in the unexposed state before the start state and after the end state.

As explained above, a case in which in the start state of the sensor holding device 1, relative position of the sensor holding unit 10 and the lid units FP is changed in the unexposed position is described, but it is not limited to this. For example, at the time of factory shipmen, when the lid units FP put the holding areas HA in the unexposed state, the sensor holding device 1 may not change the state of the lid units FP in the start state.

### <Modification 1: lid units with sealing material>

Hereinafter, with reference to the drawings, a modification 1 according to the present invention will be described.

In the first embodiment, as explained above, a case in which the sensor holding unit 10 is controlled in the exposed state and the unexposed state, by controlling the lid units FP to open or close is described, but it is not limited to this.

In the modification 1, a case in which the lid units FP have sealing material, and the sensor holding unit 10 is controlled in the exposed state and the unexposed, will be described.

About the same configuration as the embodiment mentioned above, the same numerals are attached and an explanation thereof is omitted here.

### <Sensor holding unit>

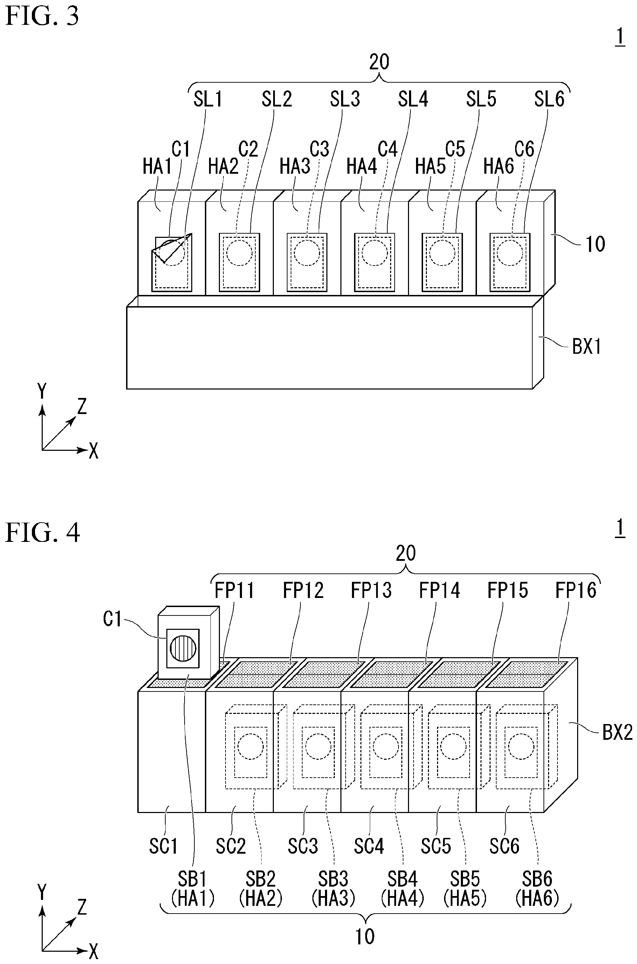

Fig. 3 is a diagram showing an example of a configuration of the sensor holding device 1 according to the modification 1.

The sensor holding device 1 according to the modification 1 includes a plate-shaped sensor holding unit 10. In this example, the sensor holding unit 10 includes six holding areas HA. As mentioned above, the corrosion sensors C1 to C6 are held in the holding areas HA1 to HA6 respectively.

### <State switching unit (lid units: sealing material)>

Also, as shown in Fig. 3, the sensor holding device 1 includes a plurality of seals SL respectively corresponding to the holding areas HA. Concretely, a seal SL1 is attached to the holding area HA1, a seal SL2 is attached to the holding area HA2, a seal SL3 is attached to the holding area HA3, a seal SL4 is attached to the holding area HA4, a seal SL5 is attached to the holding area HA5, and a seal SL6 is attached to the holding area HA6.

When the seals SL are attached, the seals SL cover the corrosion sensors C which are held in the attaching position, and put the corrosion sensors C in the unexposed state. When the seals SL are peeled, the corrosion sensors C held in the attaching position are made in the exposed state. When the sensor holding device 1 is in the start state, the seals SL are attached to the holding areas HA (the corrosion sensors C) included in the sensor holding device 1.

The control unit 30 (not shown) controls peeling of the seals SL. For example, the sensor holding device 1 includes a mechanism which can peel the seals SL, the control unit 30 peels the seals SL attached to the holding areas HA, by controlling the mechanism. Accordingly, the corrosion sensors C are made in the exposed state.

After the seals SL are peeled, and the corrosion sensors C which are held in the holding areas HA where the seals SL have been attached, detect the extent of corrosion, the corrosion sensors C are made in the unexposed state. For example, the corrosion sensors C include a mechanism which can easily remove the corrosion sensors C from the sensor holding unit 10, the control unit 30 remove the corrosion sensors C from the holding areas HA, by controlling the mechanism. Also, as shown in Fig. 3, the sensor holding device 1 according to the modification 1 includes a storage box BX1 below. The storage box BX1 is a box which put items stored inside in the unexposed state. After the corrosion sensors C detect the extent of corrosion, the control unit 30 removes the corrosion sensors C from the holding areas HA, and stores the corrosion sensors C in the storage box BX1. Accordingly, the corrosion sensors C are made in the unexposed state.

### <Summary of modification 1>

As explained above, the sensor holding device 1 according to the modification 1 can change the exposed state and the unexposed state of the corrosion sensors C, even when the lid units FP do not open and close.

The corrosion sensors C held in the holding areas HA may be made in the unexposed state by bags, instead of the seals SL. In this case, the corrosion sensors C which are covered by the bags are in the unexposed state. When the bags are removed from the corrosion sensors C, the corrosion sensors C are in the exposed state. In this case, the sensor holding device 1 includes a mechanism which removes the bags, the control unit 30 removes the bags by controlling the mechanism. After the corrosion sensors C detect the extent of corrosion, the control unit 30 stores the corrosion sensors C in the storage box BX1. Accordingly, the corrosion sensors C are made in the exposed state and the unexposed state.

### <Modification 2: lid units with rubber material>

Hereinafter, with reference to the drawings, a modification 2 according to the present invention will be described.

In the first embodiment, as explained above, a case in which the sensor holding unit 10 is controlled in the exposed state and the unexposed state, by controlling the lid units FP to open or close is described, but it is not limited to this.

In the modification 2, a case in which the lid units FP have rubber material, and the sensor holding unit 10 is controlled in the exposed state and the unexposed, will be described.

About the same configuration as the embodiment mentioned above, the same numerals are attached and an explanation thereof is omitted here.

### <Shape of sensor holding device>

Fig. 4 is a diagram showing an example of a configuration of the sensor holding device 1 according to the modification 2. As shown in Fig. 4, in the sensor holding device 1 according to the modification 2, all of the sensor holding unit 10 and the state switching unit 20 are covered by a storage box BX2 that is the storage box BX. Similar to the sensor holding unit 10 of the embodiment described above, the storage box BX2 is separated into the plurality of spaces SC by partitions. As shown in Fig. 4, the storage box BX2 includes six spaces SC which are spaces SC1 to SC6, in the storage box BX2. Each of the spaces SC has an opening at the top and has a box type shape.

### <Sensor holding unit>

In this example, the sensor holding device 1 includes slide boards SB in the spaces SC as the sensor holding unit 10. Concretely, the sensor holding device 1 includes slide boards SB1 to SB6 as the sensor holding unit 10. The slide boards SB include the holding areas HA, respectively. Namely, the slide boards SB1 to SB6 include the holding areas HA1 to HA6. As mentioned above, the corrosion sensors C1 to C6 are held in the holding areas HA1 to HA6, respectively. The slide boards SB include a mechanism which can be slide upward by the control unit 30 (not shown).

### <State switching unit (lid units: sealing material)>

Also, as shown in Fig. 4, the sensor holding device 1 includes the lid units FP with the shape that correspond to or approximately correspond to the shape of the openings of the space SC respectively. The lid units FP according to the modification 2 are formed of rubber. The lid units FP include notches. The notches of the lid units FP can make the slide boards SB and the corrosion sensors C held in the holding areas HA pass above and below the lid units FP. The openings of the spaces SC are sealed or approximately sealed by the lid units FP. Therefore, the corrosion sensors C held in the holding areas HA of the slide boards SB included in the spaces SC are in the unexposed state.

As mentioned above, the control unit 30 controls the slide boards SB and exposes the slide boards SB to the outside of the storage box BX2 via the lid units FP. In this case, the corrosion sensors C are in the exposed state. After the corrosion sensors C detect the extent of corrosion, the control unit 30 controls the slide boards SB holding the corrosion sensors C, and stores the slide boards SB inside the storage box BX via the lid units FP. In this case, the corrosion sensors C are in the unexposed state.

### <Summary of modification 2>

As explained above, the sensor holding device 1 according to the modification 2 can change the exposed state and the unexposed state of the corrosion sensors C, even when the lid units FP do not open and close.

### <Modification 3: rotation of lid units>

Hereinafter, with reference to the drawings, a modification 3 according to the present invention will be described.

In the first embodiment, as explained above, a case in which the sensor holding unit 10 is controlled in the exposed state and the unexposed state, by controlling the lid units FP to open or close is described, but it is not limited to this.

In the modification 3, a case in which the sensor holding unit 10 is controlled in the exposed state and the unexposed by rotating the lid units FP will be described.

About the same configuration as the embodiment mentioned above, the same numerals are attached and an explanation thereof is omitted here.

### < Shape of sensor holding device >

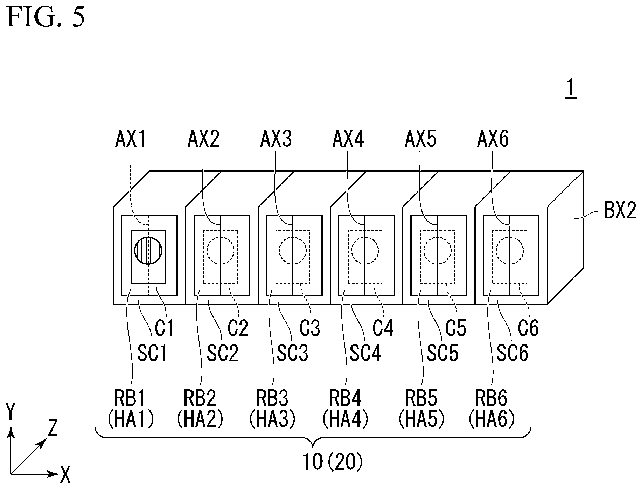

Fig. 5 is a diagram showing an example of a configuration of the sensor holding device 1 according to the modification 3. As shown in Fig. 5, in the sensor holding device 1 according to the modification 3, all of the sensor holding unit 10 and the state switching unit 20 are covered by the storage box BX2 that is the storage box BX. Similar to the sensor holding unit 10 of the embodiment described above, the storage box BX2 is separated into the plurality of spaces SC by partitions. As shown in Fig. 5, the storage box BX2 includes six spaces SC which are spaces SC1 to SC6, in the storage box BX2. Each of the spaces SC has an opening at the front and has a box type shape.

### <Sensor holding unit>

The sensor holding device 1 according to the modification 3 includes rotating plates RB as the sensor holding unit 10, the number of the rotating plates RB corresponds to the number of the spaces SC included in the sensor holding device 1. In this example, the sensor holding device 1 includes rotating plates RB 1 to RB6 as the sensor holding unit 10. The rotating plates RB are included in the spaces SC, respectively.

The rotating plates RB include the holding areas HA, respectively. Namely, the rotating plates RB1 to RB6 include the holding areas HA1 to HA6. Among the fronts and the backs of the rotating plates RB, faces including the holding areas HA are the fronts of the rotating plates RB. As mentioned above, the corrosion sensors C1 to C6 are held in the holding areas HA1 to HA6, respectively. The rotating plates RB include a mechanism that can rotate around axes parallel to the Y axis by the control unit 30 (not shown). Concretely, the rotating plates RB1 to R6 include rotating axes AX1 to AX6 which are rotating axes AX parallel to the Y axis respectively, and rotate around the rotating axes AX

### <State switching unit (lid units)>

As mentioned above, the rotating plates RB are rotated by the control unit 30. When the backs of the rotating plates RB are placed on the front of the sensor holding device 1 by rotating the rotating plates RB, the corrosion sensors C are placed inside the spaces SC and are in the unexposed state.

When the backs of the rotating plates RB are placed on the front of the sensor holding device 1, the fronts of the rotating plates RB (the corrosion sensors C) are covered by the backs of the rotating plates RB. In other words, the rotating plates RB are the sensor holding unit 10 and the state switching unit 20 (the lid units FP).

When the fronts of the rotating plates RB are placed on the front of the sensor holding device 1 by rotating the rotating plates RB, the corrosion sensors C are in the exposed state.

### <Summary of modification 3>

As explained above, the sensor holding device 1 according to the modification 3 can change the exposed state and the unexposed state of the corrosion sensors C, even when the lid units FP do not open and close.

### [Second embodiment]

Hereinafter, a second embodiment of the present invention will be described with reference to the drawings.

In the first embodiment, a case in which the sensor holding device 1 is box type, the state switching unit 20 puts the lid units FP included in the state switching unit 20 in the open state or the closed state, and the holding areas HA are made in the exposed state and the unexposed state is described.

In the second embodiment, a case in which a sensor holding device 2 is cylindrical, relative position of a state switching unit 21 and a sensor holding unit 11 is changed by rotating the sensor holding unit 11, and the holding areas HA are made in the exposed state and the unexposed state will be described.

About the same configuration as the embodiment and the modification mentioned above, the same numerals are attached and an explanation thereof is omitted here.

### <Configuration of sensor holding device: rotary type>

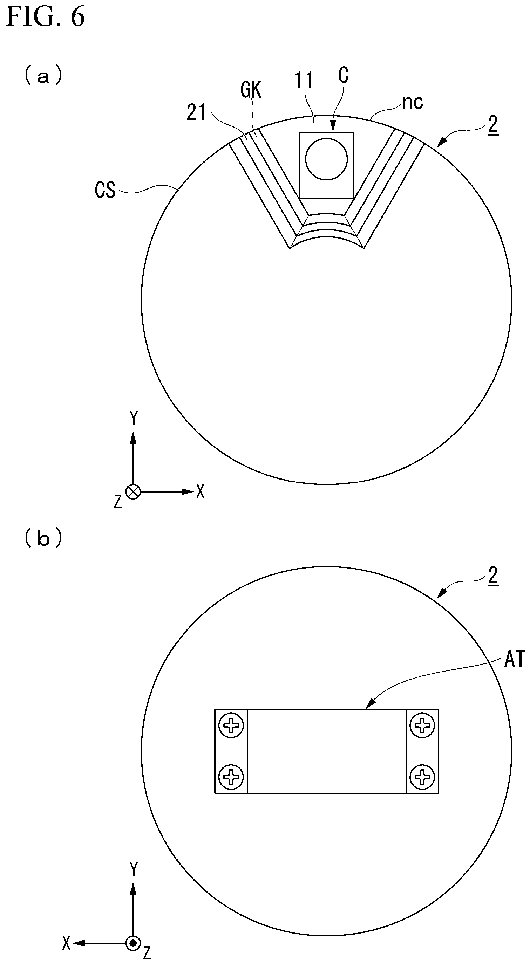

Hereinafter, with reference to Fig. 6, the configuration of the sensor holding device 2 will be described. Fig. 6 is a second diagram showing an example of the configuration of the sensor holding device 2 according to the second embodiment. Concretely, (a) in Fig. 6 shows an example of front of the sensor holding device 2, and (b) in Fig. 6 shows an example of back of the sensor holding device 2.

As mentioned above, the sensor holding device 2 is cylindrical. The sensor holding device 2 includes the sensor holding unit 11, the state switching unit 21, gaskets GK, a case CS, and a control unit 31 (not shown).

The sensor holding unit 11 is a holder including a plurality of holding areas HA on sensor surfaces, and holding corrosion sensors C.

The state switching unit 21 is a cover unit CV with a shape that covers a part of the plurality of holding areas HA (the corrosion sensors C) included in the sensor holding unit 11 and that does not cover the other part of the plurality of holding areas HA (the corrosion sensors C).

The gaskets GK are mechanisms that are placed between the sensor holding unit 11 and the cover unit CV and that close the gaps between the sensor holding unit 11 and the cover unit CV. By closing the gaps between the sensor holding unit 11 and the cover unit CV, spaces between the sensor holding unit 11 and the cover unit CV are sealed. Namely, the corrosion sensors C placed between the sensor holding unit 11 and the cover unit CV among the corrosion sensors C held in the holding areas HA of the sensor holding unit 11 are in the unexposed state.

The case CS is a case which covers the control unit 31.

As mentioned above, since the sensor holding device 2 is cylindrical, the sensor holding unit 11, the gaskets GK and the cover unit CV are circular, the diameters of the sensor holding unit 11, the gaskets GK and the cover unit CV correspond or approximately correspond. Also, the case CS is cylindrical and has depth which can store the control unit 31.

The configuration of the case CS may be the configuration in which the sensor holding unit 11, the gaskets GK and the cover unit CV are covered, instead of the configuration in which the control unit 31 is covered. In this case, the case CS is cylindrical and has depth which can store the sensor holding unit 11, the gaskets GK and the cover unit CV.

Also, as shown by (b) in Fig. 6, the sensor holding device 2 includes a mounting unit AT.

As shown by (a) in Fig. 6, the cover unit CV includes an opening that opens vertically upward in a mounting state in which the sensor holding device 2 is mounted to the object OB (in this example, the steel tower TW) by the mounting unit AT, and that puts a part of the sensor holding unit 11 in the exposed state. In the following explanation, the opening included in the cover unit CV is described as a notch nc. Therefore, the cover unit CV has the notch nc at the top in the mounting state in which the sensor holding device 2 is mounted to the steel tower TW by the mounting unit AT. Also, the gaskets GK include a notch nc, the position and the shape of the notch nc of the gaskets GK are the same as the position and the shape of the notch nc of the cover unit CV.

The corrosion sensor C placed in the position of the notch nc among the corrosion sensors C held by the sensor holding unit 11 is not covered by the cover unit CV, and is in the exposed state. In the following explanation, a position on the sensor holding unit 11 corresponding to the position of the notch nc is described as an exposed position. Therefore, the corrosion sensor C held in the exposed position is in the exposed state.

The corrosion sensors C (not shown) held at positions other than the exposed position are covered by the cover unit CV, and are in the unexposed state.

Therefore, the cover unit CV puts a part of the sensor holding unit 11 in the exposed state, and puts the other part of the sensor holding unit 11 in the unexposed state.

As shown by (a) in Fig. 6, in this example, the notch nc has the shape so that one corrosion sensor C among the corrosion sensors C held by the sensor holding unit 11 is made in the exposed state. In this case, the other corrosion sensors C except the corrosion sensor C held in the exposed position are covered by the cover unit CV and in the unexposed state.

The control unit 31 changes the exposed position by controlling relative position of the state switching unit 21 (in this example, the cover unit CV) and the sensor holding unit 11.

In this example, a case in which the sensor holding device 2 includes the gaskets GK is described, but it is not limited to this. The sensor holding device 2 may not include the gaskets GK, when the gaps do not exist between the cover unit CV and the sensor holding unit 11 in a state in which the cover unit CV covers the sensor holding unit 11.

The sensor holding device 2 may have another configuration between the sensor holding unit 11 and the cover unit CV instead of the gaskets GK, when the corrosion sensors C held in the positions other than the exposed position among the corrosion sensors C held by the sensor holding unit 11 are in the unexposed state in a state in which the cover unit CV covers the sensor holding unit 11. For example, the sensor holding device 2 may include packing between the sensor holding unit 11 and the cover unit CV.

The configuration of the sensor holding device 2 may be the configuration in which a plurality of the holding areas HA (the corrosion sensors C) are placed in the exposed position, instead of the configuration in which one of the holding areas HA (the corrosion sensors C) is placed in the exposed position. In this case, the notch nc may has a shape so that more than or equal to two of the holding areas HA (the corrosion sensors C) are made in the exposed state. The sensor holding device 2 may include more than or equal to two notches nc, one of the holding areas HA (the corrosion sensors C) is made in the exposed state by each of the notches.

### <State switching unit (cover unit)>

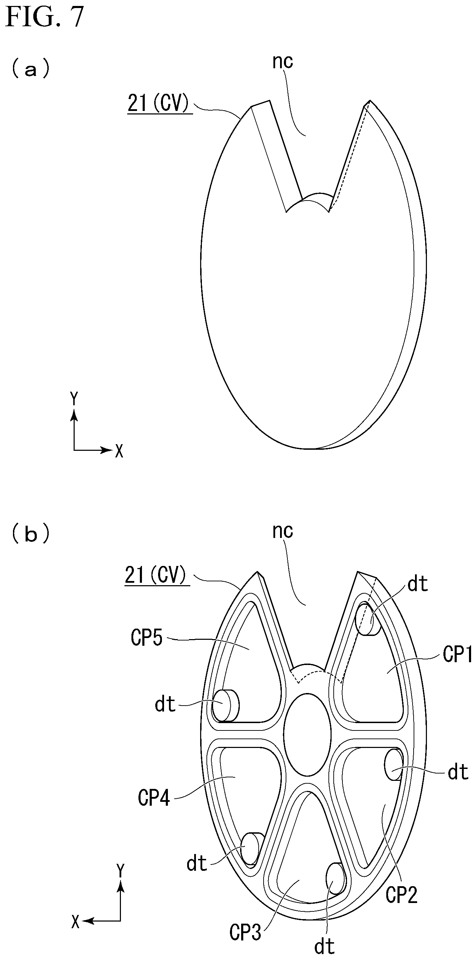

Hereinafter, with reference to Fig. 7, the state switching unit 20 (the cover unit CV) will be described in detail.

Fig. 7 is a diagram showing an example of the cover unit CV according to the second embodiment. An example of front of the cover unit CV is shown by (a) in Fig. 7, and (b) in Fig. 7 shows an example of back of the cover unit CV.

As shown by (a) in Fig. 7, a lower part of the notch nc inclines so that the front of the cover unit CV lowers towards the bottom. Accordingly, it is suppressed that rainwater etc. accumulate by the notch nc. In this case, in the sensor holding device 2, the corrosion sensors C held in the holding areas HA where the notch nc exsists are prevented from being flooded when it rains, etc.

As shown by (b) in Fig. 7, the cover unit CV has a plurality of recesses CP on the back side. Concretely, the cover unit CV has the recesses CP, the number of the recesses CP is equal to or larger than the number of the corrosion sensors C held by the sensor holding unit 11. In this example, the number of the corrosion sensors C held by the sensor holding unit 11 corresponds to the number of the recesses CP. Concretely, the cover unit CV includes five recesses CP which are recesses CP1 to CP5.

Also, in this example, the cover unit CV includes the desiccant dt in the recesses CP, respectively. The desiccant dt dries the atmosphere of the space EP (not shown) defined by the recesses CP where the desiccant dt is placed and the sensor holding unit 11. The space EP will be described later in detail.

### <Sensor holding unit>

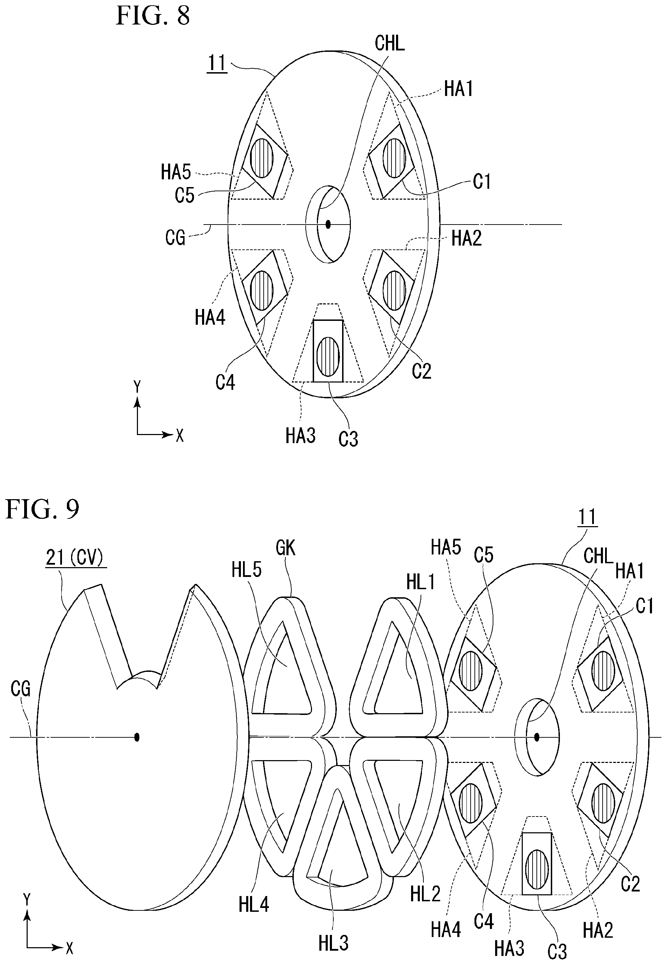

Hereinafter, with reference to Fig. 8, the sensor holding unit 11 will be described. Fig. 8 is a diagram showing an example of the sensor holding unit 11 according to the second embodiment.

As mentioned above, the sensor holding unit 11 is circular. The sensor holding unit 11 includes the holding areas HA along the circumference located around the center of a circle (hereinafter the rotation center CG). As shown in Fig. 8, in this example, the rotation center CG is an axis which is parallel to or approximately parallel to the Z axis. The holding areas HA are areas on the sensor surfaces of the sensor holding unit 11, and the positions of the holding areas HA correspond to the positions of the recesses CP included in the cover unit CV. In this example, the sensor holding unit 11 includes the holding areas HA, the number of the holding areas HA corresponds to the number of the recesses CP of the cover unit CV. Concretely, the sensor holding unit 11 includes five holding areas HA which are holding areas HA1 to HA5. Also, the sensor holding unit 11 has one corrosion sensor C in each of the holding areas HA. Concretely, the sensor holding unit 11 includes a corrosion sensor C1 in the holding area HA1, a corrosion sensor C2 in the holding area HA2, a corrosion sensor C5 in the holding area HA5.

Also, as shown in Fig. 8, the sensor holding unit 11 includes a center hole CHL penetrating from the front to the back of the sensor holding unit 11.

### <Relative position of sensor holding unit, gaskets and lid unit>

Hereinafter, with reference to Fig. 9, the gaskets GK will be described.

Fig. 9 is a diagram showing an example of a relative position of the sensor holding unit 11, the gaskets GK and the cover unit CV according to the second embodiment.

As shown in Fig. 9, the gaskets GK includes holes HL penetrating from the front to the back of the gaskets GK, the positions of the holes HL are respectively the same as the positions of the recesses CP of the cover unit CV, the shape of each of the holes HL are the same as the shape of each of the openings of the recesses CP. Therefore, in this example, the gaskets GK includes five holes HL which are holes HL1 to HL5, the shape of the holes HL1 to HL5 is the same as the shape of each of the openings of the recesses CP.

As shown in Fig. 9, the sensor holding unit 11, the gaskets GK and the cover unit CV are placed so that the centers (hereinafter the rotation center CG) of them correspond or approximately correspond. The gaskets GK and the cover unit CV cover the sensor holding unit 11 so that the openings of the recesses CP included in the cover unit CV are covered by the sensor holding unit 11. Accordingly, the spaces EP (not shown) are defined between the sensor holding unit 11 and the cover unit CV. As mentioned above, the cover unit CV includes the five recesses CP. Therefore, five spaces EP are defined between the cover unit CV, the gaskets GK and the sensor holding unit 11. The corrosion sensors C held in the positions other than the exposed position among the corrosion sensors C held in the holding areas HA are stored in the spaces EP respectively. The spaces defined by the sensor holding unit 11, the gaskets GK and the cover unit CV are sealed or approximately sealed. Namely, the holding areas HA (the corrosion sensors C) placed in the spaces EP are in the unexposed state.

As explained above, a case in which the cover unit CV includes the recesses CP is described, but it is not limited to this. The cover unit CV may include one recess CP. Concretely, the recesses CP1 to CP5 may not be separated, the recess CP may be integral. In this case, the gasket GK may include one hole HL, instead of the configuration in which the gaskets GK are separate bodies, the number of the gaskets corresponds to the number of the recesses.

### <Control unit>

The control unit 31 rotates the sensor holding unit 11 in the rotation direction around the rotation center CG. Accordingly, the relative position of the sensor holding unit 11 and the cover unit CV is changed in the rotation direction around the rotation center CG.

Concretely, the control unit 31 rotates the sensor holding unit 11 counterclockwise around the rotation center CG when it is seen from the negative side of the rotation center CG (when the positive side of the Z axis is seen). A predetermined time is, for example, a time in which the corrosion sensors C can detect the extent of corrosion in the exposed state. The control unit 31 rotates the sensor holding unit 11 so that one holding area HA among the holding areas HA included in the sensor holding unit 11 is held in the exposed position. Preferably, the control unit 31 rotates the sensor holding unit 11 every predetermined time on the basis of a timer or a program.

The holding areas HA placed at the notch nc in accordance with the relative position of the cover unit CV and the sensor holding unit 11 is not covered by the cover unit CV. Namely, the holding areas HA placed at the notch nc in accordance with the relative position of the cover unit CV and the sensor holding unit 11 are in the exposed state. The holding areas HA placed in the positions other than the position of the notch nc in accordance with the relative position of the cover unit CV and the sensor holding unit 11 are covered by the cover unit CV. Namely, the holding areas HA placed in the positions other than the position of the notch nc in accordance with the relative position of the cover unit CV and the sensor holding unit 11 are in the unexposed state.

In other words, the cover unit CV puts the holding areas HA which are not covered by the cover unit CV in the exposed state, and puts the holding areas HA which are covered by the cover unit CV in the unexposed state, in accordance with the relative position of the cover unit CV and the sensor holding unit 11.

As explained above, a case in which the control unit 31 rotates the sensor holding unit 11 every predetermined time is described, but it is not limited to this. For example, the sensor holding device 2 may include an operation unit in a position which is near a ground position where the steel tower TW is installed, the operation unit can be operated by an operator. In this case, the operator operates the operation unit so that the control unit 31 rotates the sensor holding unit 11.

Also, time when the sensor holding unit 11 is rotated may be instructed by remote control, instead of the configuration in which the control unit 31 rotates the sensor holding unit 11 every predetermined time. In this case, the sensor holding device 2 may be connected to a device which sends the instructions, so that the sensor holding device 2 can send and receive information. The control unit 31 rotates the sensor holding unit 11 on the basis of the instructions received from the device which sends the instructions.

Also, the rotation direction may be clockwise, instead of the configuration in which the rotation direction is counterclockwise around the rotation center CG when it is seen from the negative side of the rotation center CG (when the positive side of the Z axis is seen).

### <Details of control unit>

Hereinafter, with reference to the drawings, the control unit 31 which rotates the sensor holding unit 11 will be described in detail.

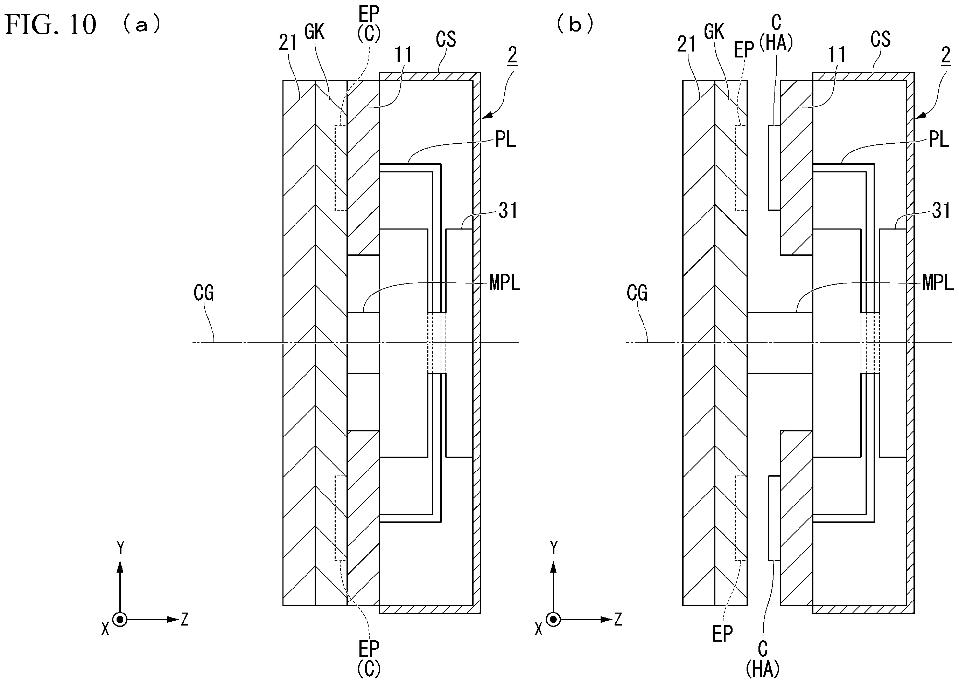

Fig. 10 is a diagram showing an example of the control unit 31 according to the second embodiment.

An example in which the control unit 31 fixes the sensor holding unit 11 is shown by (a) in Fig. 10, and (b) in Fig. 10 shows an example in which the control unit 31 rotates the sensor holding unit 11.

As shown in Fig. 10, the control unit 31 includes a support unit PL and a running unit MPL. The support unit PL connects the control unit 31 and the sensor holding unit 11. The running unit MPL connects the gaskets GK and the control unit 31 via the center hole CHL. The running unit MPL operates on the basis of the control of the control unit 31, and moves forward and backward. The control unit 31 includes such as a motor, and moves the running unit MPL by controlling the motor. The motor is, for example, a servomotor or a DC (Direct Current) motor.

The control unit 31 moves the running unit MPL forward (towards the negative side in the Z-axis direction) every predetermined time, and moves the cover unit CV and the gaskets GK forward. Accordingly, an interval occurs between the cover unit CV, the gaskets GK and the sensor holding unit 11, fixation of the sensor holding unit 11 is released, the sensor holding unit 11 is made rotatable (for example (b) in Fig. 10).

The control unit 31 rotates the sensor holding unit 11 so that one holding area HA among the holding areas HA included in the sensor holding unit 11 is held in the exposed position. A rotation angle in one operation or the sensor holding unit 11 by the control unit 31 is an angle corresponding to the positions of the holding areas HA included in the sensor holding unit 11.

Also, the control unit 31 changes Relative position of the sensor holding unit 11 and the state switching unit 21 (the cover unit CV) to the position in which the corrosion sensors C are in the unexposed state, when the corrosion sensors C held by the sensor holding unit 11 are in the start state or the end state. Concretely, the control unit 31 changes the positions other than the holding areas HA in the exposed positions in the start state or the end state.

The state switching unit 21 rotates the sensor holding unit 11 every predetermined time from the start state, and controls the rotation of the sensor holding unit 11 so that the holding areas HA1 to HA5 (the corrosion sensors C1 to C5) are respectively held in the exposed positions. Also, the state switching unit 21 returns the running unit MPL backward (towards the positive side in the Z-axis direction) after rotating the sensor holding unit 11. Accordingly, similar to the configuration described above, the cover unit CV, the gaskets GK, the sensor holding unit 11 and the state switching unit 21 are fixed (for example (a) in Fig. 10). Therefore, different corrosion sensors C are placed in the exposed position before and after the sensor holding unit 11 rotates.

Consequently, the state switching unit 21 replaces the corrosion sensors C which detect the extent of corrosion by rotating the sensor holding unit 11 and changing the holding areas HA held in the exposed position.

The configuration in which the sensor holding unit 11 is rotated in the rotation direction on the basis of the control of the control unit 31 may be changed to the configuration in which the state switching unit 21 (the cover unit CV) is rotated in the rotation direction.

### <Summary of second embodiment>

As explained above, the sensor holding device 2 according to the present embodiment includes the sensor holding unit 11 and the state switching unit 21. The sensor holding unit 11 includes the holding areas HA holding the corrosion sensors C which detect the extent of corrosion. The state switching unit 21 puts the sensor surfaces in the exposed state when the corrosion sensors C are held in a part of the holding areas HA included in the sensor holding unit 11, and puts the sensor surfaces in the unexposed state when the corrosion sensors C are held in the other part of the holding areas HA included in the sensor holding unit 10.

Also, the state switching unit 21 includes the cover unit CV having a shape so than the cover unit CV covers a part of the holding areas HA and does not cover the other part of the holding areas HA included in the sensor holding unit 11. The cover unit CV puts the holding areas HA (the corrosion sensors C) which are not covered by the cover unit CV in the exposed state, and puts the holding areas HA (the corrosion sensors C) which are covered by the cover unit CV in the unexposed state, in accordance with the relative position of the cover unit CV and the sensor holding unit 11.

In the sensor holding device 2 according to the present embodiment, the state switching unit 21 changes the corrosion sensors C in the unexposed state by rotating the sensor holding unit 11 and changing the relative position of the sensor holding unit 11 and the cover unit CV.

Accordingly, the sensor holding device 2 according to the present embodiment can change the corrosion sensors C in the exposed state and the unexposed state, by a simple configuration.

The cover unit CV included in the sensor holding device 2 according to the present embodiment includes the opening (in this example, the notch nc) that opens vertically upward when mounted by the mounting unit AT and that puts a part of the sensor holding unit in the exposed state.

When the sensor holding device 2 is mounted so that the notch nc of the sensor holding device 2 is placed vertically below, there may be a case in which the sensor holding device 2 itself shields the corrosion sensors C and the exposed state of the corrosion sensors C is inhibited. Concretely, when the notch nc is placed at the bottom, there may be a case in which the sensor holding device 2 itself inhibits the corrosion sensors C from being exposed directly to rainfall etc.

In the sensor holding device 2 according to the present embodiment, the notch nc is placed at the top, and it is suppressed that the exposed state of the corrosion sensors C held in the exposed position is inhibited by other components. Accordingly, in the sensor holding device 2 according to the present embodiment, the corrosion sensors C can detect the extent of corrosion in the same environment as the object OB.

The state switching unit 21 (the cover unit CV) included in the sensor holding device 2 according to the present embodiment can put the sensor surfaces in the unexposed state when the corrosion sensors C are held in all of the holding areas HA included in the sensor holding unit 11. Also, the state switching unit 21 puts the holding areas HA in the unexposed state in the start state or the end state, by making all of the cover unit CV in the closed state.

In accordance with the sensor holding device 2 according to the present embodiment, it can be suppressed that the corrosion sensors C are made in the exposed state before the start state and after the end state, by making the corrosion sensors C in the unexposed state in the start state and the end state.

As explained above, a case in which the relative position of the sensor holding unit 11 and the cover unit CV is changed in the unexposed position when the sensor holding device 2 is in the start state is described, but it is not limited to this. For example, when the relative position of the sensor holding unit 11 and the cover unit CV in the unexposed position at the time of factory shipment, it is not necessary for the sensor holding device 2 to change the position of the sensor holding unit 11 in the start state.

The sensor holding unit 11 included in the sensor holding device 2 may rotate around the rotation center CG2 parallel to or approximately parallel to the Y axis, instead of the configuration in which the sensor holding unit 11 included in the sensor holding device 2 rotates around the rotation center CG2 parallel to or approximately parallel to the Z axis.

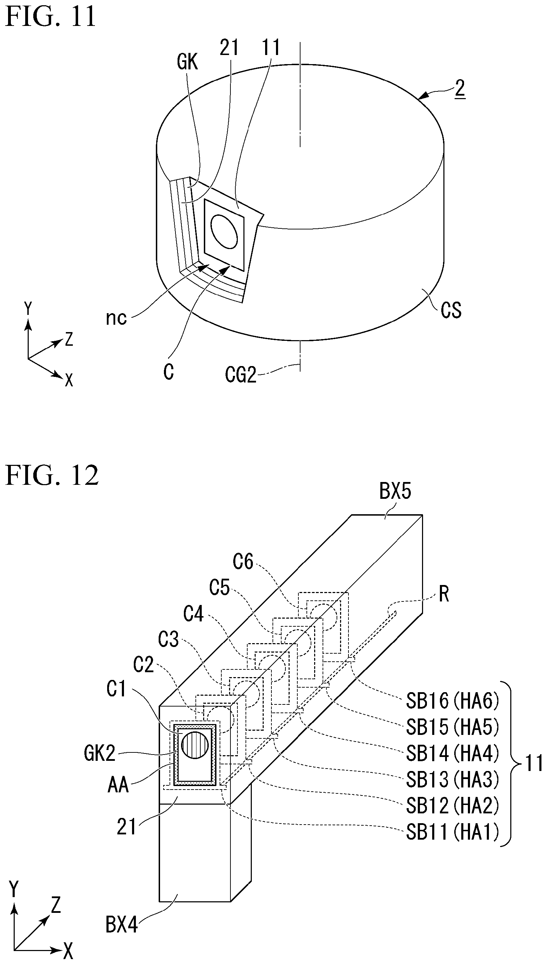

Hereinafter, the configuration in which the sensor holding unit 11 included in the sensor holding device 2 rotates around the rotation center CG2 parallel to or approximately parallel to the Y axis will be described. Fig. 11 is a diagram showing an example of a mounting direction of the sensor holding device 2 according to the second embodiment. In this case, as shown in Fig. 11, the cover unit CV of the sensor holding device 2 includes the notch nc on the side of the sensor holding device 2.

### <Modification 4>

Hereinafter, with reference to the drawings, a modification 4 according to the second embodiment will be described.

Fig. 12 is a diagram showing an example of a configuration of the sensor holding device 2 according to the modification 4.

In the second embodiment, the case in which the sensor holding device 2 is cylindrical, the control unit 31 rotates the sensor holding unit 11 so that the relative position of the state switching unit 21 (the cover unit CV) and the sensor holding unit 11 is controlled, and the exposed position is changed is described.

In the modification 4, a case in which the sensor holding device 2 is box type, the control unit 31 controls the relative position of the state switching unit 21 and the sensor holding unit 11 so that the exposed position is changed will be described.

About the same configuration as the first and second embodiments mentioned above, the same numerals are attached and an explanation thereof is omitted here.

### <Shape of sensor holding device>

Fig. 12 is the diagram showing the example of the configuration of the sensor holding device 2 according to the modification 4. As shown in Fig. 12, the sensor holding device 2 according to the modification 4 is covered by a storage box BX5 that is the storage box BX. The front among surfaces included in the storage box BX5 is the cover unit CV. The cover unit CV includes an opening AA with a shape that corresponds to or approximately corresponds to the shape of the corrosion sensors C.

### <Sensor holding unit>

The sensor holding device 2 according to the modification 4 includes slide boards SB as the sensor holding unit 11, the number of the slide boards SB corresponds to the number of the corrosion sensors C included in the sensor holding device 2. In this example, the sensor holding device 2 includes slide boards SB 11 to SB16 as the sensor holding unit 11. The slide boards SB include the holding areas HA respectively. Namely, the slide boards SB11 to SB16 include the holding areas HA1 to HA6. As mentioned above, the corrosion sensors C1 to C6 are held in the holding areas HA1 to HA6 respectively. The sensor holding device 2 includes a rail R. The slide boards SB are supported by the rail R, and are placed from the front to the back. The slide boards SB are slid along the rail R from the back to the front by the control unit 31 (not shown), the positions of the slide boards SB are controlled by the control unit 31.

### <State switching unit (cover unit and opening)>

As mentioned above, the sensor holding device 2 includes the opening AA in front. The slide boards SB are slid forward by the control of the control unit 31. When the slide boards SB are placed at the front, the corrosion sensors C held in the holding areas HA of the slide boards SB are made in the exposed state by the opening AA.

As shown in Fig. 12, the slide boards SB may include the gaskets GK2 which correspond to or approximately correspond to the opening AA. Accordingly, the corrosion sensors C other than one corrosion sensor C held in the holding area HA of the slide board SB located at the front, are in the unexposed state.

Also, the control unit 31 controls the slide boards SB holding the corrosion sensors C which have detected the extent of corrosion, and stores the slide boards SB inside the storage box BX4. The storage box BX4 is the storage box BX included in the sensor holding device 2 below. For example, the slide boards SB has a mechanism which can easily remove the slide boards SB from the rail R, the control unit 31 removes the slide boards SB from the rail R by controlling the mechanism, and stores the slide boards SB in the storage box BX4. Accordingly, the corrosion sensors C are in the unexposed state.

### <Summary of modification 4>

As explained above, in accordance with the sensor holding device 2 according to the modification 4, the control unit 31 controls the relative position of the state switching unit 21 (the cover unit CV) and the sensor holding unit 11 so that the exposed state and the unexposed state of the corrosion sensors C can be changed.

### <Modification 5>

Hereinafter, with reference to the drawings, a modification 5 according to the second embodiment will be described.

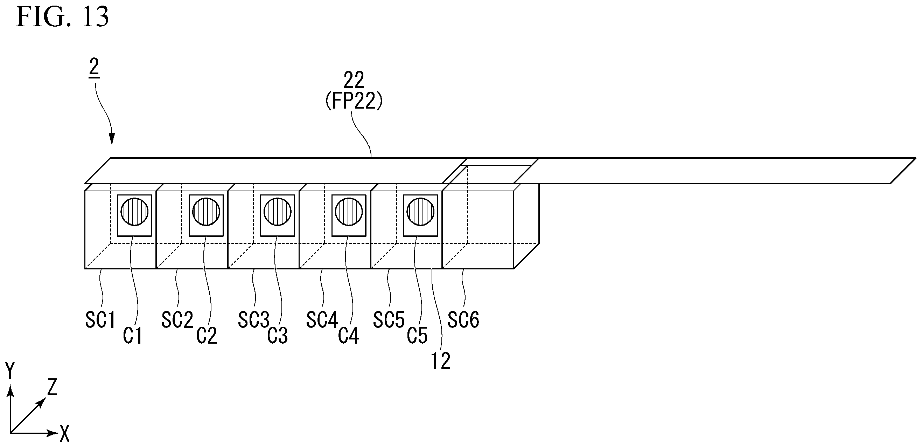

Fig. 13 is a diagram showing an example of a configuration of the sensor holding device 2 according to the modification 5.

In the second embodiment, the case in which the sensor holding device 2 is cylindrical, the control unit 31 rotates the sensor holding unit 11 so that the relative position of the cover unit CV and the sensor holding unit 11 is controlled, and the exposed position is changed is described.

In the modification 5, a case in which the sensor holding device 2 is box type, a control unit 32 controls the relative position of a state switching unit 22 and a sensor holding unit 12 so that the exposed position is changed will be described.

About the same configuration as the first and second embodiments mentioned above, the same numerals are attached and an explanation thereof is omitted here.

The sensor holding device 2 according to the modification 5 includes the sensor holding unit 12 and the state switching unit 22. The sensor holding unit 12 has a shape which is the same as the sensor holding unit 10. In the modification 5, the spaces SC1 to SC5 include the holding areas HA (the holding areas HA1 to HA5) respectively. The sensor holding unit 12 holds the corrosion sensors C1 to C5 in the holding areas HA1 to HA5 respectively. The space SC6 does not include the holding areas HA.

The state switching unit 22 is a lid unit FP22 including an opening corresponding to or approximately corresponding to the shape of an opening of the spaces SC included in the sensor holding unit 12. The shape of the opening of the lid unit FP22 corresponds to or approximately corresponds to the shape of the opening of the spaces SC. Therefore, the holding area HA (the corrosion sensor C) of the space SC with the opening corresponding to the position of the opening of the lid unit FP22 is not covered by the lid unit FP22, and is in the exposed state. The holding areas HA (the corrosion sensors C) of the spaces SC with the openings which do not correspond to the position of the opening of the lid unit FP22 are covered by the lid unit FP22, and are in the unexposed state.

As shown in Fig. 13, in the start state, the lid unit FP22 is placed in the position where the opening of the lid unit FP22 corresponds to or approximately corresponds to the opening of the space SC (in this example, the space SC6) which is placed at the far right among the sensor holding unit 12. The relative position of the sensor holding unit 12 and the lid unit FP22 is moved on the basis of the control of the control unit 32.

The control unit 32 controls the relative position of the lid unit FP22 and the sensor holding unit 12 and changes the exposed position.

Concretely, the control unit 32 moves the lid unit FP22 to a position in which the opening of the space SC corresponds to or approximately corresponds to the opening of the lid unit FP22. The distance the control unit 32 moves the lid unit FP22 in a single operation corresponds to the length of the space SC in the X axis direction. The control unit 32 moves the lid unit FP22 left by the length of the space SC in the X axis every predetermined time.

The control unit 32 puts the relative position of the sensor holding unit 12 and the lid unit FP22 in the unexposed position in at least one of the start state and the end state.

### <Summary of modification 5>

As explained above, in accordance with the sensor holding device 2 according to the modification 5, the control unit 32 controls the relative position of the state switching unit 22 (the lid unit FP) and the sensor holding unit 12 so that the exposed state and the unexposed state of the corrosion sensors C can be changed.

In the sensor holding device 2, the lid unit FP22 may be fixed and mounted to the object OB and the sensor holding unit 12 may be moved on the basis of the control of the control unit 32, instead of the configuration in which the sensor holding unit 12 is fixed and mounted to the object OB and the lid unit FP22 is moved on the basis of the control of the control unit 32.

As explained above, a case in which the control unit 32 moves the lid unit FP22 left is described, but it is not limited to this. The control unit 32 may move the lid unit FP22 right. In this case, in the start state, the lid unit FP22 is placed to the position in which the position of the opening of the lid unit FP22 corresponds to or approximately corresponds to the opening of one of the spaces SC (in this example, the space SC1) which is placed at the far left among the sensor holding unit 12.

As explained above, a case in which one sensor holding device (the sensor holding device 1 or the sensor holding device 2) is mounted to the object OB is described, but it is not limited to this. For example, the plurality of the sensor holding devices may be mounted to the object OB in a sensor holding system.

In this case, the sensor holding system changes the exposed positions of the sensor holding devices included in the sensor holding system. The corrosion sensors C included in each of the sensor holding devices detect the extent of corrosion. For example, changing the exposed positions may correspond to a configuration in which after all of the corrosion sensors C included in one sensor holding device detect the extent of corrosion, the corrosion sensors C included in the other sensor holding device starts detecting the extent of corrosion, or may correspond to a configuration in which after one of the corrosion sensors C included in one sensor holding device detects the extent of corrosion, the corrosion sensors C included in the other sensor holding device starts detecting the extent of corrosion.

According to the sensor holding system, it is possible to reduce labor further for mounting the corrosion sensors C to the object OB.

The embodiments of the present invention have been described in detail above with reference to the drawings, but specific configurations are not limited to the embodiments and may be appropriately modified within the scope of the present invention without departing from the gist of the present invention. The configurations described in the above-described embodiments may be combined.

### [Reference Signs List]

1, 2 Sensor holding device
10, 11, 12 Sensor holding unit
20, 21, 22 State switching unit
30, 31, 32 Control unit
AT Mounting unit
C, C1, C2, C3, C4, C5, C6 Corrosion sensor
CG, CG2 Rotation center
CV Cover unit
FP, FP1, FP2, FP3, FP4, FP5, FP6, FP22 Lid unit
HA, HA1, HA2, HA3, HA4, HA5, HA6 Holding area
MPL Running unit
nc Notch
OB Object

## Claims

1. A sensor holding device comprising:
a sensor holding unit configured to include a plurality of holding areas holding detection units that are configured to detect the extent of corrosion; and
a state switching unit configured to be able to put sensor surfaces in an exposed state when the detection units are held in a part of the holding areas among the holding areas included in the sensor holding unit, and to put the sensor surfaces in an unexposed state when the detection units are held in the other part of the holding areas.

2. The sensor holding device according to claim 1, wherein the state switching unit includes a plurality of lid units respectively corresponding to the holding areas included in the sensor holding unit, the lid units of the holding areas that are made in the exposed state are in an open state, the lid units of the holding areas that are made in the unexposed state are in a closed state.

3. The sensor holding device according to claim 1, wherein the state switching unit includes a cover unit with a shape that can cover a part of the holding areas among the holding areas included in the sensor holding unit without covering the other part of the holding areas, the holding areas that are not covered by the cover unit are made in the exposed state in accordance with the relative position of the cover unit and the sensor holding unit, the holding areas that are covered by the cover unit are made in the unexposed state in accordance with the relative position of the cover unit and the sensor holding unit.

4. The sensor holding device according to claim 3, wherein the relative position of the sensor holding unit and the cover unit is changed in the rotation direction around a predetermined rotation center, the sensor holding unit includes the holding areas along the circumference of the rotation center.

5. The sensor holding device according to any one of claims 1 to 4, wherein the state switching unit can put the sensor surfaces in the unexposed state when the detection units are held in all of the holding areas included in the sensor holding unit.

6. The sensor holding device according to any one of claims 1 to 5 comprising a mounting unit configured to mount the sensor holding device itself to an object,
wherein when the sensor holding device itself is mounted to the object, the state switching unit can put the sensor surfaces in a vertically upward exposed state as the exposed state.

7. A sensor holding system including a plurality of sensor holding devices according to any one of claims 1 to 6, wherein the sensor holding system changes the exposed state of the sensor holding devices.
